# EUROPÄISCHE PATENTANMELDUNG

(11) **EP 1 564 535 A1**
(43) Veröffentlichungstag der Anmeldung: **17.08.2005**
(21) Anmeldenummer: 04020810.0
(22) Anmeldetag: 02.09.2004
(51) Int. Cl.: G01J 3/14, G02B 5/04

(54) **Filtereinheit mit einstellbarer Wellenlänge sowie eine Anordnung mit der Filtereinheit**

(30) Priorität: 11.02.2004 WO PCT/CH20/04000080
(71) Anmelder: Technomedica AG, 8852 Wollerau (CH)
(72) Erfinder: Linder, Patrick, 5318 Mandach (DE)
(74) Vertreter: Troesch Scheidegger Werner AG

(57) **Zusammenfassung**

Filtereinheit (10) zum Filtern von Licht, wobei eine erste Maske (3), eine Prismeneinheit (7) und eine zweite Maske (8) vorgesehen sind. Die Prismeneinheit (7) ist zwischen den beiden Masken (3, 8) angeordnet, wobei die erste (3) und die zweite Maske (8) korrespondierende Öffnungen aufweisen und ein Öffnungspaar bilden. Für mindestens ein Öffnungspaar ist ein Prisma in der Prismeneinheit (7) vorgesehen. Damit wird eine präzise und schmalbandige Filtereinheit erhalten. Des Weiteren sind eine Anordnung mit der Filtereinheit sowie eine Vorrichtung zum Erfassen von Bildern angegeben.

## Beschreibung

Die vorliegende Erfindung betrifft eine Filtereinheit nach dem Oberbegriff von Patentanspruch 1, eine Anordnung mit der Filtereinheit sowie eine Vorrichtung zum Erfassen von Bildern.

Zur Filterung von Licht werden beispielsweise optische Farbfilter in der Art von optischen Linsen eingesetzt. Erfahrungsgemäss weisen solche Farbfilter neben anderen Nachteilen eine erhebliche Dämpfung auf, die auch im Durchlassbereich des Farbfilters vorhanden ist.

Die bekannten Farbfilter werden insbesondere auch in Kombination mit einer Phototransistoreinheit oder einem Photodetektor verwendet. Hierbei handelt es sich um eine photosensitive Schicht, vor die das Farbfilter angeordnet wird, damit auf die photosensitive Schicht lediglich eine gewisse Wellenlänge bzw. ein gewisser Wellenlängebereich gelangen kann. Solche Anordnungen mit Farbfilter zur Begrenzung auf bestimmte Wellenlängen bzw. Wellenlängenbereiche sind an sich bekannt, wobei diese insbesondere den Nachteil aufweisen, dass eine hohe Dämpfung des Lichts mit der interessierenden Wellenlänge, d.h. auch im Durchlassbereich des Farbfilters, vorhanden ist. Damit sind die Messresultate, basierend auf der im Durchlassbereich des Farbfilters gemessenen Intensität, mit zum Teil erheblichen Fehlern behaftet. Dazu kommt, dass die bekannten Farbfilter schlecht justiert werden können. Dies gilt insbesondere auch für Farbfilter basierend auf Flüssigkristallen, die überdies temperaturabhängig und relativ träge sind. Des Weiteren sind sie aufwändig realisierbar und demzufolge mit hohen Kosten verbunden.

Der vorliegenden Erfindung liegt daher die Aufgabe zugrunde, eine Filtereinheit anzugeben, welche die vorstehend aufgeführten Nachteile nicht aufweist.

Diese Aufgabe wird durch die im kennzeichnenden Teil von Anspruch 1 angegebenen Massnahmen gelöst. Vorteilhafte Ausgestaltungen der Erfindung, eine Anordnung mit der Filtereinheit sowie eine Vorrichtung zum Erfassen von Bildern sind in weiteren Ansprüchen angegeben.

Die Erfindung weist die folgenden Vorteile auf: Indem eine erste Maske, eine Mikroprismeneinheit und eine zweite Maske vorgesehen sind, wobei die Mikroprismeneinheit zwischen den beiden Masken angeordnet ist, indem des weiteren die erste und die zweite Maske korrespondierende Öffnungen aufweisen und ein Öffnungspaar bilden und indem schliesslich für mindestens ein Öffnungspaar ein Prisma in der Mikroprismeneinheit vorgesehen ist, wird eine präzise und schmalbandige Filtereinheit erhalten.

Des Weiteren zeichnet sich die erfindungsgemässe Filtereinheit durch einen oder mehrere der folgenden Vorteile aus:
- Der Durchlassbereich kann im Wellenlängenbereich von ca. 1400 nm bis ca. 430 nm justiert werden. Die Genauigkeit der durchgelassenen Wellenlängen ist abhängig von der Genauigkeit der Schlitz- oder Lochmaske. In einer Ausführungsform ist vorgesehen, eine Abstufung in Schritten von 0.5 nm zu erhalten.
- Sowohl polarisiertes als auch unpolarisiertes Licht kann gefiltert werden.
- Die Eigenschaften der Filtereinheit, insbesondere die durchgelassenen Wellenlängen, können elektronisch eingestellt werden.
- Die erfindungsgemässe Filtereinheit kann äusserst klein realisiert werden.
- Der Herstellungsaufwand und die Herstellungskosten sind relativ niedrig.

Die Erfindung wird nachfolgend mit Bezug auf die in den Zeichnungen dargestellten Ausführungsformen näher beschrieben. Dabei handelt es sich um beispielhafte Ausführungsformen, die zum Verständnis der in den Ansprüchen beanspruchten Gegenstände dienen. Es zeigt:
- Fig. 1: eine erfindungsgemässe Filtereinheit mit einer photosensitiven Schicht und
- Fig. 2: eine weitere Ausführungsform der erfindungsgemässen Filtereinheit in perspektivischer Darstellung,
- Fig. 3: eine Mikroprismeneinheit zur Verwendung in der erfindungsgemässen Filtereinheit,
- Fig. 4: zwei übereinander liegende Masken zur Einstellung der durchzulassenden Wellenlängen,
- Fig. 5: eine Anwendung der erfindungsgemässen Filtereinheit bei einem Bildsensor,
- Fig. 6: eine weitere Ausführungsform einer erfindungsgemässen Filtereinheit mit einer photosensitiven Schicht in perspektivischer Darstellung und
- Fig. 7: eine weitere Ausführungsform einer erfinderischen Filtereinheit mit einer photosensitiven Schicht.

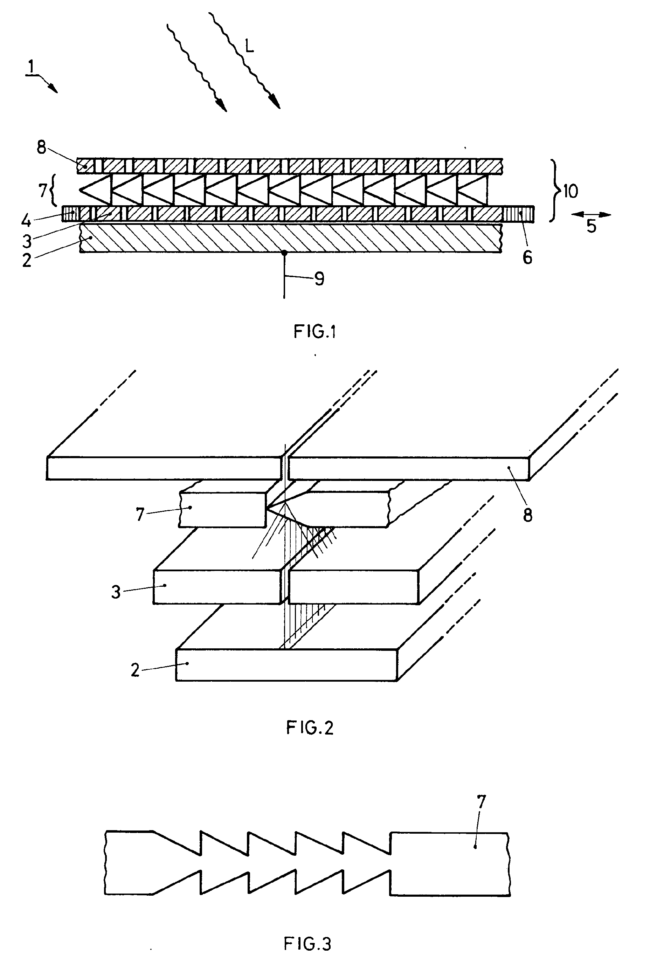

Fig. 1 zeigt eine erfindungsgemässe Phototransistoreinheit 1, die im Wesentlichen aus einer photosensitive Schicht 2, die beispielsweise mit einem oder mehreren Phototransistoren realisiert ist, und einer vor der photosensitiven Schicht 2 angeordneten Filtereinheit 10 besteht. Die Filtereinheit 10 weist eine bewegliche Schlitzmaske 3, eine Mikroprismeneinheit 7 und eine feste Schlitzmaske 8 auf. Die bewegliche Schlitzmaske 3 kann in den durch einen Pfeil 5 angegebenen Richtungen bewegt werden, und zwar mit Hilfe von in Bezug auf die bewegliche Schlitzmaske 3 seitlich angeordneten Verschiebungseinheiten 4 und 6. In einer spezifischen Ausführungsform ist die eine Verschiebungseinheit 4 mit Hilfe einer Piezoeinheit und die andere Verschiebungseinheit 6 als viskoses Federelement realisiert. Das viskose Federelement besteht dabei beispielsweise aus einer Silikoneinlage, einer Einlage aus natürlichem Kautschuk oder aus einer Stahlfeder. Bei der Verwendung einer Silikoneinlage ist eine Pufferschicht zur Verhinderung von Materialwanderungen notwendig.

Erfindungsgemäss ist die Prismeneinheit 7 zwischen der festen und der beweglichen Schlitzmaske 8 bzw. 3 angeordnet, wobei die Masken 3, 8 korrespondierende Öffnungen aufweisen, die ein Öffnungspaar bilden. Die Prismeneinheit 7 weist für mindestens ein Öffnungspaar ein Prisma auf.

In einer weiteren Ausführungsform der erfindungsgemässen Anordnung, welche in Fig. 1 nicht dargestellt ist, wird an Stelle der beweglichen Schlitzmaske 3 die Position der Mikroprismeneinheit 7 mit Hilfe von Verschiebungseinheiten verändert, die beispielsweise wiederum in der Form einer Piezoeinheit und einem viskosen Federelement realisiert sind. Auch hiermit können selektiv diejenigen Lichtwellen L durch die Schlitzmaske 4, die im Unterschied zur Ausführungsform gemäss Fig. 1 nunmehr ortsfest ist, auf die photosensitive Schicht 2 geleitet werden.

Eine noch weitere Ausführungsform der erfindungsgemässen Filtereinheit 10 besteht darin, dass beide Schlitzmasken beweglich sind. Hiermit sind Auslenkungen der einzelnen Schlitzmasken reduziert, da jede der Schlitzmasken um die Hälfte des zurückzulegenden Weges bewegt wird. Die Schlitzmasken bewegen sich dabei gegenläufig.

Die beschriebene Filtereinheit 10 stellt somit ein Farbfilter dar, bei dem auf elektronischem Weg die gefilterten Wellenlängen eingestellt werden können. Darüber hinaus ist diese Filtereinheit 10 ein temperaturunabhängiges Farbfilter, das auf Wellenlängen von ca. 1400 bis 430 nm einstellbar ist. Die Filtereinheit 10 und mithin die ganze Phototransistoreinheit 1 zeichnen sich durch einen oder mehrere der folgenden Vorteile aus:
- die Bauform der Filtereinheit 10 bzw. der Phototransistoreinheit 1 kann äusserst klein gewählt werden;
- elektronische und präzise Einstellbarkeit der gewünschten Wellenlänge von denjenigen Lichtstrahlen, die auf die photosensitive Schicht 2 auftreffen sollen;
- minimaler mechanischer Aufwand;
- äusserst kurze Reaktionszeiten.

Um genaue Messresultate mit der erfindungsgemässen Phototransistoreinheit 1 erhalten zu können, muss vorab eine Eichung vorgenommen werden. Eine solche Eichung kann beispielsweise wie folgt durchgeführt werden:

Die Phototransistoreinheit 1 wird einer Lichtquelle mit einer bekannten Wellenlänge ausgesetzt. Die bewegliche Schlitzmaske 3 bzw. 8 - oder gegebenenfalls die Mikroprismeneinheit 7, sofern diese beweglich ist - wird dann solange mit Hilfe der Verschiebungseinheiten 4, 6 verschoben, bis auf der photosensitiven Schicht 2 ein Signalmaximum erhalten wird. Der entsprechende Grad der Verschiebung kann in Abhängigkeit des verwendeten Verschiebungsmechanismus für die Eichung festgehalten werden. Werden als aktive Verschiebungseinheiten Piezoelemente verwendet, so kann das an die Piezoelemente angelegte elektrische Signal mit der Wellenlänge der Lichtquelle in Bezug gesetzt werden, womit die Eichung für diese Wellenlänge abgeschlossen ist. Weitere Eichungen mit anderen Wellenlängen der Lichtquellen werden mit Vorteil vorgenommen, um allfällige Nichtlinearitäten erfassen zu können.

Es hat sich gezeigt, dass die Mikroprismeneinheit 7 aus einer Substanz mit der chemischen Formel NaCl in kristalliner Form hergestellt werden kann.

Fig. 2 zeigt in perspektivischer Darstellung eine weitere Ausführungsform der erfindungsgemässen Filtereinheit. Im Unterschied zur Ausführungsform gemäss Fig. 1 weist diese Ausführungsform lediglich einen Schlitz in den Schlitzmasken 3 und 8 auf. Entsprechend weist die Mikroprismeneinheit 7 ein einziges Prisma auf. Durch die Schlitzmaske 8 wird ein einfallender Lichtstrahl parallelisiert. Der parallelisierte Lichtstrahl wird in der Folge durch die Mikroprismeneinheit 7 in Lichtkomponenten unterschiedlicher Wellenlängen zerlegt. Mit Hilfe der beweglichen Schlitzmaske 3 wird die interessierende Lichtkomponente ausgewählt, indem die bewegliche Schlitzmaske 3 entsprechend positioniert wird. Dadurch wird erreicht, dass nur das Licht mit der gewünschten Wellenlänge auf die photosensitive Schicht trifft und gemessen wird.

Eine weitere Ausführungsform der vorliegenden Erfindung besteht darin, Lochmasken anstelle von Schlitzmasken zu verwenden. Damit werden die entsprechenden Abbildungen auf der photosensitiven Schicht nicht streifenförmig sondern punktförmig.

Fig. 3 zeigt eine Mikroprismeneinheit 7, wie sie beispielsweise in der Ausführungsform gemäss Fig. 1 verwendet wird. Die Mikroprismeneinheit 7 ist beispielsweise aus Glas hergestellt, in das die einzelnen Prismen eingeschliffen worden sind. Zu beachten ist beim Herstellen der Mikroprismeneinheit, dass die einzelnen Prismen mit den entsprechenden Abmessungen der Schlitz- bzw. Lochmaske im Einklang sind, d.h., dass die Anordnung eines Schlitzes bzw. eines Loches mit dem entsprechenden Prisma übereinstimmt, so dass die gewünschten Wellenlängen bzw. Wellenlängebereiche gemessen werden können. Die korrespondierenden Schlitze bzw. Löcher werden allgemein als Öffnungspaare bezeichnet.

Die Mikroprismeneinheit 7 besteht in einer weiteren Ausführungsform aus einem Polymer anstelle von Glas. Damit ist die Herstellung vereinfacht und die Kosten niedriger als bei Verwendung von Glas. Denkbar ist auch eine Zusammensetzung von einzelnen Prismen zur Bildung der Mikroprismenschicht. Die einzelnen Prismen werden dann mit einem Klebstoff zusammen geklebt.

Wie aus den vorstehenden Erläuterungen, insbesondere im Zusammenhang mit den Ausführungsvarianten gemäss Fig. 1 bis 3, deutlich wurde, besteht eine Anwendung der erfindungsgemässen Filtereinheit darin, diese mit einer photosensitiven Schicht 2 zu kombinieren. Damit wird eine Phototransistoreinheit erhalten, mit der äusserst genaue Messungen in einem bestimmten Wellenlängenbereich gemacht werden können, wobei die Erfindung eine elektronische Einstellung der zu messenden Wellenlänge ermöglicht.

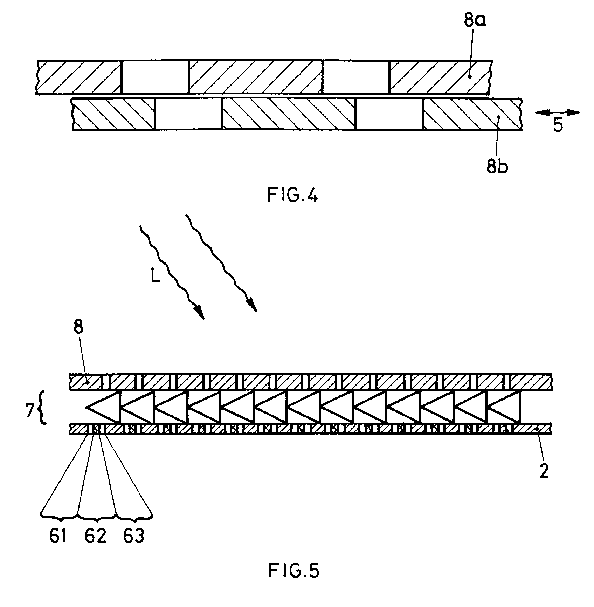

Eine weitere Ausführungsform der erfindungsgemässen Filtereinheit besteht darin, die von der Schlitz- bzw. Lochmaske durchgelassenen Wellenlängen einstellbar zu gestalten. Hierzu ist vorgesehen, als Maske, wie sie in Fig. 1 mit dem Hinweiszeichen 3 und 8 gekennzeichnet sind, zwei übereinander liegende Masken vorzusehen, die sich gegeneinander verschieben lassen. Eine solche Ausführungsform ist in Fig. 4 dargestellt, wobei zwei unmittelbar übereinander liegende Masken 8a und 8b, die sich gegeneinander - beispielsweise wiederum mit Piezoelementen in Kombination mit viskosen Federelementen - verschieben lassen. Hierdurch wird die Schlitz- bzw. Lochgrösse verändert, mithin ist eine Schlitz- bzw. Lochmaske erhalten worden, bei der die Öffnung einstellbar ist.

Eine weitere Anwendung der erfindungsgemässen Filtereinheit besteht darin, dass als photosensitive Schicht ein Bildsensor, beispielsweise vom Typ CCD-(Charged Coupled Device), verwendet wird, womit sich die Möglichkeit eröffnet, die vorliegenden Erfindung in der Kameratechnik, insbesondere in der digitalen Kameratechnik, zu verwenden, wobei dann eine weitere Ausführungsform darin besteht, dass keine bewegliche, sondern nur eine ortsfeste Schlitz- oder Lochmaske über der photosensitiven Schicht bzw. über dem CCD-Sensor vorhanden ist.

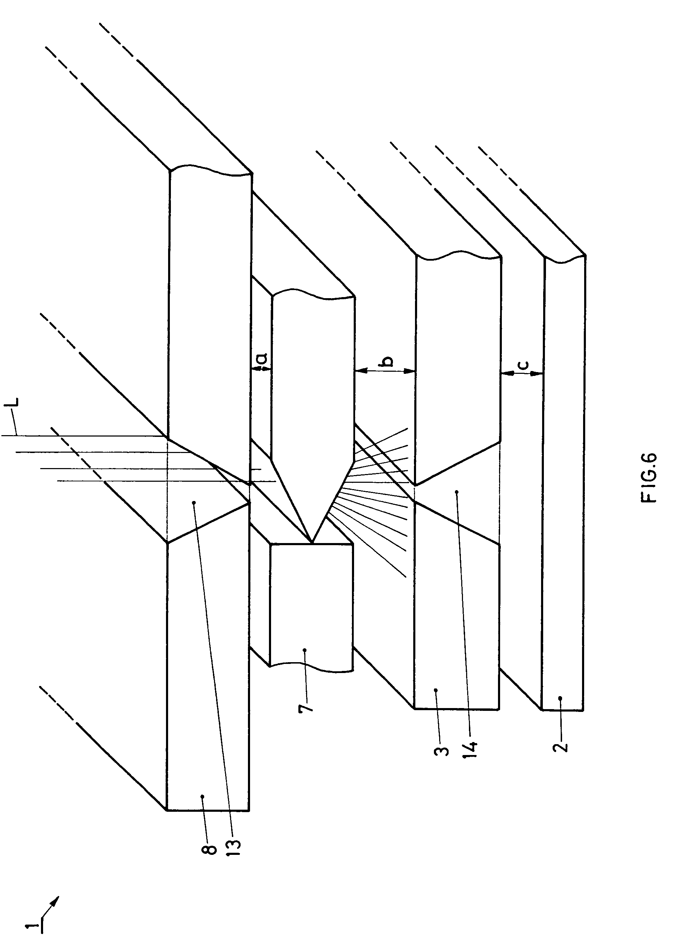

In Fig. 5 ist eine solche Anwendung dargestellt. Sie besteht im Wesentlichen aus einer Lochmaske 8, welche oberhalb der Prismeneinheit 7 angeordnet ist, und einer photosensitiven Schicht 2, die beispielsweise mit Hilfe von Photodioden oder von Phototransistoren als Photoelemente realisiert ist, wobei die Photoelemente derart angeordnet sind, dass für jedes Loch in der Lochmaske, d.h. für jeden Bildpunkt, drei Photoelemente 61, 62 und 63 vorgesehen sind. Das Photoelement 61 ist dabei im Bereich des roten Lichtes angeordnet, d.h. es treffen Lichtstrahlen mit Wellenlängen zwischen 500 und 600 nm auf, das Photoelement 62 ist im Bereich des grünen Lichtes angeordnet, d.h. es treffen Lichtstrahlen mit Wellenlängen zwischen 600 und 700 nm auf, und das Photoelement 63 schliesslich ist im Bereich des blauen Lichtes angeordnet, d.h. es treffen Wellenlängen zwischen 700 und 800 nm auf. Es wird darauf hingewiesen, dass es somit für photographische Anwendungen nicht erforderlich ist, eine zweite Maske vor der photosensitiven Schicht anzuordnen. Es reicht aus, wenn für jeden Bildpunkt drei Photoelemente vorhanden sind. Erst bei einer genaueren Abstufung der durchgelassenen Wellenlängen ist somit eine zweite Loch- bzw. Schlitzmaske erforderlich.

Aus Fig. 5 ist entnehmbar, dass für eine Öffnung in der Maske 8 ein Prisma der Prismeneinheit 7 vorgesehen ist. Denkbar ist, dass eine Prismeneinheit 7 aus stabförmigen Prismen besteht, die sich über eine Zeile von Öffnungen (bei einer Ausführungsform mit einer Lochmaske) erstreckt. Die Photoelemente 61, 62 und 63 entsprechen dabei einer jeweiligen Öffnung in der Maske 8.

Eine weitere Ausführungsform der erwähnten photographischen Anwendung besteht darin, dass neben den Photoelementen für Rot, Grün und Blau zusätzlich ein Photoelement im Bereich des ultravioletten Lichts und/oder im Bereich des infraroten Lichts angeordnet ist. Selbstverständlich können dann auch die Photoelemente für rotes, grünes und blaues Licht weggelassen werden.

Eine weitere Ausführungsform besteht darin, das oben genannte Prinzip sowohl auf normale Bildaufnahmen als auch auf Photopapier anzuwenden, was eine bessere Ausbeute des einfallenden Lichtes zur Folge hat. Insbesondere lassen sich damit hoch auflösende Schwarz/Weiss-Bilder erzeugen.

Fig. 6 zeigt eine weitere Ausführungsform einer erfindungsgemässen Filtereinheit 1 mit einer beweglichen Schlitzmaske 8, einer Prismeneinheit 7, einer festen Schlitzmaske 3 und einer photosensitiven Schicht 2 entsprechend der Ausführungsform, welche in Fig. 2 dargestellt ist. Im Unterschied zu dieser weist die Ausführungsform gemäss Fig. 6 einerseits eine bewegliche Schlitzmaske 8 auf, deren den Schlitz bildenden Seitenwände einen konischen Verlauf haben, und zwar ist der Schlitz auf der Lichtaustrittsseite enger als auf der Lichteintrittsseite. Anderseits weist die feste Schlitzmaske 3 ebenfalls konisch verlaufende Seitenwände auf, allerdings in umgekehrter Richtung, so dass die Schlitzbreite auf der Lichteintrittsseite kleiner ist als auf der Lichtaustrittsseite. Mit anderen Worten ist die Schlitzbreite auf der Seite der Prismeneinheit 7 kleiner als auf der Seite der photosensitiven Schicht 2.

In einer Ausführungsvariante sind der Schlitz der beweglichen Schlitzmaske 8 mit einer Sammeloptik 13 und/oder der Schlitz der fixen Schlitzmaske 3 mit einem Diffusor 14 ausgestattet. Während durch die Sammeloptik 13 eine höhere Lichtmenge bzw. Lichtquantenmenge erhalten wird, die auf der Prismeneinheit 7 auftrifft, wird durch den Diffusor 14 das durch die Prismeneinheit 7 monochrom austretende Licht im Wesentlichen gleichmässig und grossflächig auf der photosensitiven Schicht 2 verteilt. Insgesamt wird hierdurch eine höhere Empfindlichkeit der Phototransistoreinheit erhalten.

In Fig. 6 ist der Abstand zwischen der beweglichen Schlitzmaske 8 und der Prismeneinheit 7 mit a, der Abstand zwischen der Prismeneinheit 7 und der festen Schlitzmaske mit b und der Abstand zwischen der festen Schlitzmaske 3 und der photosensitiven Schicht 2 mit c bezeichnet. Es hat sich gezeigt, dass die Abstände a und c vorzugsweise möglichst klein gewählt werden. Der Abstand b ist vorzugsweise variabel und dient dabei zur Begrenzung bzw. Einstellung der Bandbreite der Lichtstrahlen, die durch den Schlitz der festen Schlitzmaske 3 gelangen.

Es wird darauf hingewiesen, dass der konische Verlauf - d.h. die Steilheit der den Schlitz begrenzenden Seitenwände - der festen Schlitzmaske 3 derart gewählt wird, dass der relevante Messbereich auf der photosensitiven Schicht vollflächig ausgeleuchtet wird. Damit ist gewährleistet, dass es zu keinen Fehlern bei den Messresultaten kommt.

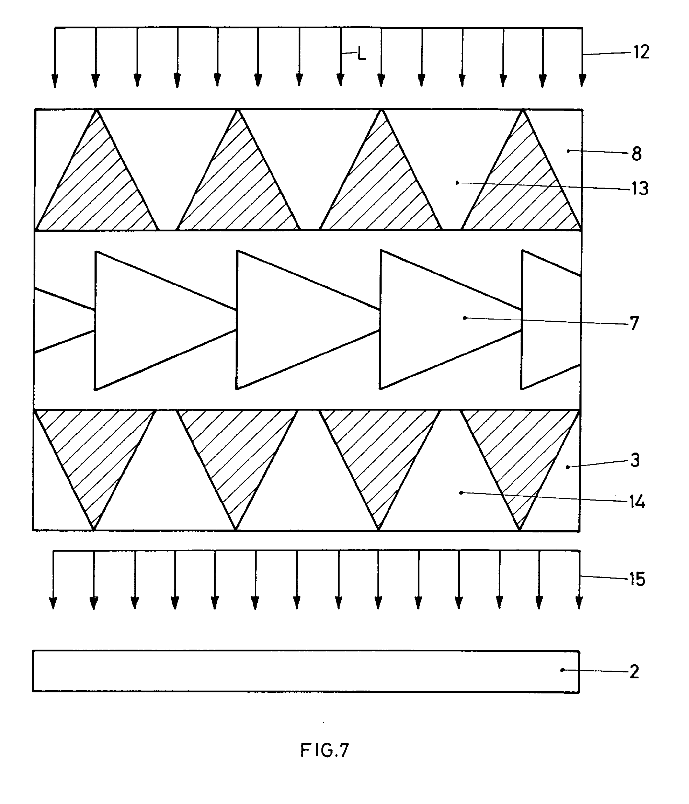

In Fig. 7 ist eine weitere Ausführungsform der erfindungsgemässen Filtereinheit mit einer photosensitiven Schicht 2 mit mehreren Schlitzen bzw. Löchern in der Schlitz- bzw. Lochmaske 8 analog zur Ausführungsform gemäss Fig. 1. Mit 12 ist gemischtes Licht und mit 15 ist monochromatisches Licht gekennzeichnet, wobei letzteres allein das auf die photosensitive Schicht 2 auftrifft.

Bei der Ausführungsform mit einer beweglichen Schlitzmaske 8 sind die die Schlitze bildenden Seitenwände konisch verlaufend, wobei die Schlitzöffnung auf der Seite des Lichteintritts maximal gewählt ist, so dass in jeden Schlitz möglichst viel Licht einfallen kann. Entsprechend laufen die die Schlitze bildenden Seitenwände in einen Spitz zusammen, der jeweils mit der Oberseite der beweglichen Schlitzmaske 8 zusammenfällt. Demgegenüber ist die feste Schlitzmaske 3 umgekehrt angeordnet in dem Sinne, dass die breite Öffnung auf der Seite der photosensitiven Schicht 2 zu liegen kommt. Durch den im Schlitz enthaltenen Diffusor 14 ist gewährleistet, dass die photosensitive Schicht maximal und gleichmässig ausgeleuchtet wird, womit eine höhere Empfindlichkeit und genauere Messresultate erreicht werden.

Bei einer weiteren Ausführungsform, für die die Querschnittdarstellung gemäss Fig. 7 ebenfalls Gültigkeit hat, sind anstelle von Schlitzen Löcher in den Masken 8 und 3 vorgesehen. Die Löcher in den Masken 8 und 3 sind daher Kegelstumpf-förmig, ebenso die in die Masken 8 und 3 eingelassenen Einsätze als Sammellinsen 13, im Falle der beweglichen Lochmaske 8, oder als Diffusor 14, im Falle der festen Lochmaske 3.

Es wird ausdrücklich darauf hingewiesen, dass - wie schon anlässlich der Ausführungsformen gemäss den Fig. 1 und 2 erläutert - auch bei den Ausführungsformen gemäss den Fig. 6 und 7 die bewegliche Maske 8 fixiert und die feste Masken 8 beweglich ausgebildet werden kann. Des Weiteren sind Konstellationen gemäss Fig. 4 bei den Ausführungsformen gemäss Fig. 6 und 7 ebenfalls denkbar.

Schliesslich eignen sich die Ausführungsformen gemäss den Fig. 6 und 7 vorzüglich für einen Bildsensor, wie er anhand Fig. 5 beschrieben worden ist.

## Patentansprüche

1. Filtereinheit (10) zum Filtern von Licht, **dadurch gekennzeichnet, dass** eine erste Maske (3), eine Prismeneinheit (7) und eine zweite Maske (8) vorgesehen sind, wobei die Prismeneinheit (7) zwischen den beiden Masken (3, 8) angeordnet ist, dass die erste (3) und die zweite Maske (8) korrespondierende Öffnungen aufweisen und ein Öffnungspaar bilden und dass für mindestens ein Öffnungspaar ein Prisma in der Prismeneinheit (7) vorgesehen ist.

2. Filtereinheit (10) nach Anspruch 1, **dadurch gekennzeichnet, dass** die erste Maske (3) in Bezug auf die Prismeneinheit (7) fixiert und die zweite Maske (8) in Bezug auf die erste Maske (3) bzw. in Bezug auf die Prismeneinheit (7) mit Hilfe mindestens einer Verschiebungseinheit (4, 6) verschiebbar ist.

3. Filtereinheit (10) nach Anspruch 1, **dadurch gekennzeichnet, dass** die erste Maske (3) in Bezug auf die zweite Maske (8) fixiert und die Prismeneinheit (7) in Bezug auf die erste Maske (3) bzw. in Bezug auf die zweite Maske (8) mit Hilfe mindestens einer Verschiebungseinheit (4, 6) verschiebbar ist.

4. Filtereinheit (10) nach Anspruch 2 oder 3, **dadurch gekennzeichnet, dass** die mindestens eine Verschiebungseinheit (4, 6) seitlich der zu verschiebenden Einheit (7, 8) angeordnet ist.

5. Filtereinheit (10) nach einem der Ansprüche 2 bis 4, **dadurch gekennzeichnet, dass** die mindestens eine Verschiebungseinheit (4, 6) aus einer Piezoeinheit besteht.

6. Filtereinheit (10) nach einem der Ansprüche 2 bis 4, **dadurch gekennzeichnet, dass** zwei Verschiebungseinheiten (4, 6) vorgesehen sind, wobei die eine ein Piezoelement und die andere ein viskoses Federelement ist.

7. Filtereinheit (10) nach einem der Ansprüche 1 bis 6, **dadurch gekennzeichnet, dass** die Prismeneinheit (7) aus Glas besteht.

8. Filtereinheit (10) nach Anspruch 7, **dadurch gekennzeichnet, dass** einzelne Prismen in das Glas eingeschliffen oder eingeätzt sind.

9. Filtereinheit (10) nach einem der Ansprüche 1 bis 6, **dadurch gekennzeichnet, dass** die Prismeneinheit (7) aus einem Polymer besteht.

10. Filtereinheit (10) nach einem der Ansprüche 1 bis 9, **dadurch gekennzeichnet, dass** die erste und die zweite Maske (3, 8) Schlitzmasken oder Lochmasken sind.

11. Filtereinheit (10) nach einem der Ansprüche 1 bis 10, **dadurch gekennzeichnet, dass** die die Schlitze bildenden Seitenwände der Schlitzmasken bzw. die die Löcher bildenden Seitenwände der Lochmasken konisch verlaufen bzw. einen Kegelstumpf bilden.

12. Filtereinheit (10) nach Anspruch 11, **dadurch gekennzeichnet, dass** die erste Maske (8) Öffnungen aufweist, die auf der Seite der Prismeneinheit (7) kleiner sind als auf der gegenüberliegenden Seite.

13. Filtereinheit (10) nach Anspruch 10 oder 11, **dadurch gekennzeichnet, dass** die zweite Maske (3) Öffnungen aufweist, die auf der Seite der Prismeneinheit (7) kleiner sind als auf der gegenüberliegenden Seite.

14. Anordnung mit einer Filtereinheit (10) nach einem der Ansprüche 1 bis 13 und mit einer photosensitiven Schicht (2), wobei die photosensitive Schicht (2) angrenzend an die zweite Maske (3) angeordnet ist.

15. Anordnung nach Anspruch 14, **dadurch gekennzeichnet, dass** die photosensitive Schicht (2) aus einem oder mehreren Phototransistoren oder aus einem oder mehreren Bildsensoren besteht.

16. Anordnung nach Anspruch 15, **dadurch gekennzeichnet, dass** die photosensitive Schicht (2) aus einem Bildsensor vom Typ CCD-(Charged Coupled Device) besteht.

17. Vorrichtung zum Erfassen von Bildern, **dadurch gekennzeichnet, dass** eine erste Maske (3) mit Öffnungen, eine Prismeneinheit (7) und eine photosensitiven Schicht (2) vorgesehen sind, wobei die Prismeneinheit (7) zwischen der ersten Maske (3) und der photosensitiven Schicht (2) angeordnet ist, und dass die photosensitive Schicht (2) mindestens drei Bereiche umfasst, in denen das einfallende Licht messbar ist, wobei das auf die mindestens drei Bereiche fallende Licht von der gleichen Öffnung stammt.

18. Vorrichtung nach Anspruch 17, **dadurch gekennzeichnet, dass** in einem ersten Bereich rotes Licht, in einem zweiten Bereich grünes Licht und in einem dritten Bereich blaues Licht messbar ist.

19. Vorrichtung nach Anspruch 17 oder 18, **dadurch gekennzeichnet, dass** erste Maske (3) vom Typ Lochmaske ist.

20. Vorrichtung nach einem der Ansprüche 17 bis 19, **dadurch gekennzeichnet, dass** Licht in einem weiteren Bereich messbar ist, in den ultraviolettes Licht fällt.

21. Vorrichtung nach einem der Ansprüche 17 bis 20, **dadurch gekennzeichnet, dass** Licht in einem weiteren Bereich messbar ist, in den infrarotes Licht fällt.

22. Vorrichtung nach einem der Ansprüche 17 bis 21, **dadurch gekennzeichnet, dass** die die Löcher bildenden Seitenwände der Lochmasken einen Kegelstumpf bilden.

23. Vorrichtung nach Anspruch 22, **dadurch gekennzeichnet, dass** die erste Maske (8) Öffnungen aufweist, die auf der Seite der Prismeneinheit (7) kleiner sind als auf der gegenüberliegenden Seite.
